# EUROPÄISCHE PATENTSCHRIFT

(11) **EP 0 663 063 B1**
(45) Veröffentlichungstag und Bekanntmachung des Hinweises auf die Patenterteilung: **08.01.1997**
(21) Anmeldenummer: 93920668.6
(22) Anmeldetag: 27.09.1993
(51) Int. Cl.: F28D 20/00

(54) **WÄRMESPEICHER, INSBESONDERE LATENTWÄRMESPEICHER**
HEAT ACCUMULATOR, IN PARTICULAR FOR LATENT HEAT
ACCUMULATEUR DE CHALEUR, EN PARTICULIER ACCUMULATEUR DE CHALEUR LATENTE

(30) Priorität: 29.09.1992 DE 4232556
(43) Veröffentlichungstag der Anmeldung: 19.07.1995
(73) Patentinhaber: LÄNGERER & REICH GmbH & Co., D-70794 Filderstadt (DE); Bayerische Motoren Werke Aktiengesellschaft, 80788 München (DE)
(72) Erfinder: STRÄHLE, Roland, Dipl.-Ing.(FH), D-72669 Unterensingen (DE); HÖRZ, Stephan, Dipl.-Ing.(FH), D-70794 Filderstadt (DE); BEDNAREK, Henryk, D-86899 Landsberg (DE)
(74) Vertreter: Kratzsch, Volkhard, Dipl.-Ing.
(86) Internationale Anmeldenummer: DE9300918
(87) Internationale Veröffentlichungsnummer: WO9408195

(56) Entgegenhaltungen:
- WO-A-88/09911
- DE-A- 4 020 859
- FR-A- 2 667 934

## Beschreibung

Die Erfindung bezieht sich auf einen Wärmespeicher, insbesondere Latentwärmespeicher, der im Oberbegriff der Ansprüche 1 und 2 genannten Art.

Es ist ein Wärmespeicher bekannt (DE-40 20 859, Al), bei dem der zwischen der Innenhülle und der Außenhülle gebildete Isolationsraum zur Entgasung ausgeheizt und evakuiert wird. DieEvakuierung hat den Sinn, dadurch eine möglichst gute Isolation zu erreichen, um die Verluste bei der Wärmespeicherung möglichst gering zu halten. Bekanntlich verzögern Stoffe, z.B. H₂O, H₂ od. dgl., die aus den diesen Isolationsraum begrenzenden Wänden unter Vakuum ausgasen, den Evakuiervorgang. Daher wird der Isolationsraum ausgeheizt, um diese Stoffe schneller absaugen zu können. Die Ausheizung erfolgt, nachdem das Gehäuse des Wärmespeichers fertiggestellt und das Speichermedium in den Speicherkern eingebracht ist. Häufig liegt eine sinnvolle Ausheiztemperatur, wie sie für den Isolationsraum notwendig ist, oberhalb der max. erlaubten Temperatur des Speichermediums, so daß die Gefahr der Schädigung des Speichermediums durch zu hohe Temperatur besteht. Daher hat man bei einem Wärmespeicher Vorkehrung getroffen, während der Ausheizung den Speicherkern gegenüber dem Isolationsraum durch Schutzvorrichtungen zu isolieren und dadurch eine Überhitzung des Speichermediums zu vermeiden. Derartige Schutzvorrichtungen sind aufwendig. Ebenso aufwendig sind etwaige Kühlmaßnahmen, um beim Ausheizen das Speichermedium gegen Schädigung zu schützen.

Ferner ist ein Wärmespeicher bekannt (FR-26 67 934, Al), bei dem der Isolationsraum vor dem Einbringen des Speichermediums ausgeheizt worden ist und das Speichermedium erst nach dem Ausheizvorgang eingefüllt worden ist. Dadurch soll der Gefahr einer etwaigen Schädigung des Speichermediums vorgebeugt werden, wobei ferner Schutzvorrichtungen, z.B. um das Speichermedium beim Ausheizen vor Überhitzung zu schützen oder zu kühlen, entbehrlich sind. Ferner kann für die Ausheizung des Isolationsraumes eine höhere Temperatur gewählt werden. Bei diesem bekannten Wärmespeicher erstreckt sich der Stutzen, der eine Einfüllöffnung für das Einfüllen des Speichermediums in die Innenhülle aufweist, ausgehend von der Innenhülle durch den Isolationsraum und durch die Außenhülle hindurch nach außen, wobei die außen befindliche Einfüllöffnung des Stutzens mittels eines Schließelements verschließbar ist. Ferner ist bei diesem Wärmespeicher auch eine Alternativlösung vorgesehen, gemäß der der Stutzen der Innenhülle, dessen Einfüllöffnung mit einem Schließglied verschlossen ist, sich im Inneren einer Zufuhrleitung oder einer Abfuhrleitung befindet, über die im Betrieb des Wärmespeichers das Arbeitsmedium dem Speicnerkern zuführbar bzw. aus diesem ableitbar ist. Bei dieser Gestaltung ist die Einfüllöffnung der Innenhülle nur durcn die Zufuhrleitung bzw. Abfuhrleitung und somit nur erschwert zugänglich. Bei der anderen Gestaltung mit von der Innenhülle ausgehendem, durch den Isolationsraum hindurch und die Außennülle verlaufendem Stutzen ergeben sich Herstellungsnachteile für den Wärmespeicher. Z.B. gestaltet sich dadurch das Einsetzen des Speicherkerns in die Außenhülle schwierig. Nachteilig ist bei dem bekannten Wärmespeicher ferner, daß das Einbringen des Speichermediums in den Speicherkern mitunter schwierig ist. Besondere Maßnahmen, die dem Einbringen des Isoliermittels in den Isolationsraum dienen, sind beim bekannten Wärmespeicher nicht vorgesehen.

Es ist ferner ein Wärmespeicher bekannt (WO-A-8809/911) der eine Innenhülle mit darin enthaltenem Speicherkern und eine Außenhülle aufweist, welche die Innenhülle unter Bildung eines Isolationsraumes mit Abstand umgibt. Der Isolationsraum dient der thermischen Isolierung und kann ein Vakuum oder thermisch isolierende Pulver oder Faserstoffe oder eine Kombination aus Vakuum und Isolierstoffen oder auch ein anderes Isolationsmittel enthalten. Die Innenhülle enthält als die unmittelbar der Wärmespeicherung dienende Einrichtung den Speicherkern. Wie in den Speicherkern ein Speichermedium eingefüllt wird und der Speicher insoweit dicht verschlossen wird, ist nicht weiter erläutert. Erläutert ist nur, daß für den Zu- und Abfluß des wärmetransportierenden Übertragungsmittels, als welches z.B. das Kühlwasser eines Verbrennungsmotors dient, eine Zuflußleitung und eine Abflußleitung vorgesehen sind, die jeweils im oberen Bereich der Innenhülle in diese münden. Ober die Zuflußleitung in die Innenhülle eingeführtes Obertragungsmittel gibt im Wärmeaustausch Wärme an das Speichermedium im Speicherkern ab, der damit aufgeladen wird. Bei der Entladung wird diese gespeicherte Wärme im Wärmeaustausch vom Speichermedium im Speicherkern übertragen auf das Übertragungsmittel, welches durch die Zuflußleitung und Abflußleitung in die Innenhülle eingeführt bzw. daraus abgeführt wird. Die Außenhülle hat einen etwa winkelförmigen Stutzen, durch den die Zuflußleitung und Abflußleitung der Innenhülle hindurcn nach außen geführt werden. Der winkelförmige Stutzen ist mittels einer endseitigen Stirnwand verschlossen, die dort, wo die Zuflußleitung und Abflußleitung der Innenhülle herausgeführt sind, mit diesen Leitungen verbunden ist. Der von den Leitungen mit Abstand durchzogene Stutzen der Außenhülle enthält dazwischen ebenfalls einen Isolationsraum, der wie der Isolationsraum zwischen Innenhülle und Außenhülle gestaltet ist. Wie das Isoliermittel in den Isolationsraum zwischen Innenhülle und Außenhülle gelangt, ist nicht ersichtlich. Ein annähernd vertikaler Abschnitt der Zuflußleitung und Abflußleitung zur Innenhülle, der quer dazu wärmeisoliert ist, soll so verlaufen, daß darin eine ruhende Sperrschicht zwischen dem im Wärmespeicher befindlichen heißen Übertragungsmittel und dem kühleren Obertragungsmittel außerhalb gebildet ist und damit ein Wärmeabfluß des heißen Übertragungsmittels verhindert ist.

Der Erfindung liegt die Aufgabe zugrunde, einen Wärmespeicher, insbesondere Latentwärmespeicher, der eingangs genannten Art zu schaffen, der eine einfachere Herstellung ermöglicht.

Die Aufgabe ist bei einem Wärmespeicher, insbesondere Latentwärmespeicher, der eingangs genannten Art gemäß der Erfindung durch die Merkmale im Kennzeichnungsteil des Anspruchs 1 gelöst. Eine alternative Lösung gemäß der Erfindung ergibt sich durch die Merkmale im Kennzeichnungsteil des Anspruchs 2. Aufgrund der voneinander getrennten Stutzen der Innenhülle und der Außenhülle ist das Einbringen des Speicherkerns in die Außenhülle vereinfacht und schon dadurch eine einfachere Herstellung des Wärmespeichers möglich, insbesondere dann, wenn nach Anspruch 1 der Stutzen der Innenhülle vor Erreichen des Stutzens der Außenhülle endet; denn durch den axialen Abstand der Stutzen voneinander läßt sich der Speicherkern schneller und einfacher in die Außenhülle einsetzen.

Von Vorteil ist ferner, daß aas Einbringen des Speichermediums in den Speicherkern erleichtert ist. Ebenso ist das Einbringen des Isoliermittels in den Isolationsraum leichter und einfacher zu bewerkstelligen. Soll der Isolationsraum statt dessen nicht mit Isoliermittel gefüllt werden, sondern lediglich evakuiert werden, so ist auch diese Evakuierung des Isolationsraumes über den Stutzen der Außenhülle einfacher, leichter und kostengünstiger bewerkstelligbar. Von Vorteil ist ferner, daß bei dieser Gestaltung des Wärmespeichers die Prufmöglichkeiten auf Dichtheit wesentlich einfacher sind.

Weitere vorteilhafte Erfindungsmerkmale und Ausgestaltungen des Wärmespeichers gemäß der Erfindung ergeben sich aus den Ansprüchen 3 bis 9 sowie aus den Ansprüchen 10 bis 16,die ein Verfahren zur Herstellung eines Wärmespeichers, insbesondere Latentwärmespeichers, nach Anspruch 1 oder 2 betreffen. Bei der Herstellung ist es in einfacher und zuverlässiger Weise möglich, zunächst. den Isolationsraum auszuheizen und zu evakuieren, wobei in Einzelfällen bedarfsweise ein provisorischer Verschluß des Isolationsraumes mittels des Verschlußgliedes vorgenommen werden kann,um nach dem Ausheizen und Evakuieren das Eindringen etwaiger neuer Verunreinigungen in den Isolationsraum zu verhindern. Auch kann für diesen Fall der Isolationsraum mit einem inerten Stoff gefüllt werden. Bedarfsweise kann eine Dichtprüfung des Wärmespeichers nach dem Ausheizen und Evakuieren vorgenommen werden,z.B. durch Abdrücken mit Helium oder in sonstiger Weise. Erst nach dem Ausheizen des Isolationsraumes wird das Speichermedium eingefüllt und danach die das Einfüllen des Speichermediums zulassende Öffnung, z.B. im betreffenden Stutzen der Innenhülle, verschlossen, vorzugsweise vakuumdicht. Sodann läßt sich in einfacher Weise in dem Isolationsraum die Isolationsschicht erstellen, entweder durch erneutes Evakuieren des Isolationsraumes oder dadurch, daß ein Isoliermittel eingebracht wird und zusätzlich eine Evakuierung des Isolationsraumes erfolgt. Wird ein Isoliermittel eingebracht, so wird dieses zweckmäßigerweise vorausgeheizt, d.h. vor dem Einfüllen separat ausgeheizt, z.B. durch Erwärmung über 200° C, so daß etwaige Luft- und Feuchtigkeitsbestandteile aus dem Isoliermittel entfernt werden. Das Isoliermittel kann sodann in einer hermetisch abgeschlossenen Unterdruckstrecke, in der der gleiche Unterdruck wie in dem Isolationsraum herrscht, in den Isolationsraum eingebracht werden. Anschließend wird der Isolationsraum vakuumdicht verschlossen. Diese Arbeitsgänge sind schnell und problemlos durchführbar, so daß in einfacher und kostengünstiger Weise ein Wärmespeicher auf diese Weise herstellbar ist.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen Schnitt eines Teils eines Wärmespeichers gemäß einem ersten Ausführungsbeispiel,
- Fig. 2: einen schematischen Schnitt eines Wärmespeichers gemäß einem zweiten Ausführungsbeispiel.

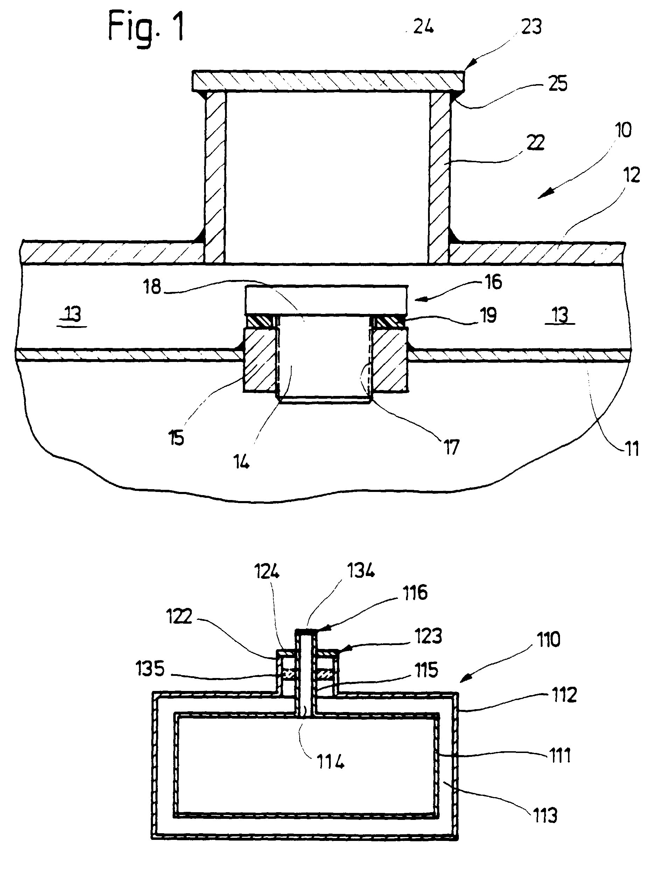

In Fig. 1 ist schematisch ein Teil eines Wärmespeichers 10, insbesondere eines Latentwärmespeichers, gezeigt, der z.B. zylindrisch gestaltet ist oder auch jede andere äußere Form aufweisen kann. Der Wärmespeicher 10 kann in beliebiger Ausrichtung im Raum angeordnet werden. Er weist im Inneren einen hier nicht besonders dargestellten Speicherkern auf, der die der Wärmespeicherung dienende Einrichtung bildet und von einer nur schematisch angedeuteten Innenhülle 11 umschlossen ist. Die Innenhülle 11 besteht aus Metall, z.B. aus Aluminium. Sie ist mit Abstand von einer Außenhülle 12 umgeben. Aufgrund des Abstandes ist zwischen der Innenhülle 11 und der Außenhulle 12 ein Isolationsraum 13 gebildet, der mit einem Isoliermittel gefüllt ist und/oder evakuiert ist.

Der Wärmespeicher 10 weist ferner in Fig. 1 nicht sichtbare, durch den Isolationsraum 13 hindurchführende Leitungen auf, z.B. Rohrleitungen, von denen eine als Zuflußleitung und die andere als Rückflußleitung für ein wärmetransportierendes Medium, beispielsweise Kühlwasser einer Brennkraftmaschine, dient.

Im innerhalb der Innenhülle 11 befindlichen Speicherkern ist ein Speichermedium enthalten, das z.B. aus einem dafür geeigneten Salz besteht.

Die Innenhülle 11 ist mit einer Einfüllöffnung 14 versehen, die hier von einem an der Innenhülle 11 vakuumdicht befestigten, insbesondere angeschweißten, Stutzen 15 definiert ist. Über die Einfüllöffnung 14, insbesondere den Stutzen 15, wird das Speichermedium in das Innere der Innenhülle 11, insbesondere in den Speicherkern, eingebracht. Danach ist die Einfüllöffnung mittels eines mechanischen Schließelementes 16 verschließbar. Beim ersten Ausführungsbeispiel in Fig. 1 besteht dieses Schließelement 16 des Stutzens 15 aus einer in ein Innengewinde 17 des Stutzens 15 einschraubbaren Verschlußschraube 18. Statt dessen kann als Schließelement 16 auch eine auf ein Außengewinde des Stutzens 15 aufschraubbare Verschlußkappe vorgesehen sein. Der durch das Schließelement 16 erreichte Abschluß der Einfüllöffnung 14 muß vakuumdicht sein. Daher ist zwischen dem Schließelement 16 und der Oberseite des Stutzens 15 ein vakuumtaugliches Dichtelement 19, z.B. ein Dichtungsring, angeordnet. Das Dichtelement 19 ist z.B. aus einem nicht hygroskopischen Kunststoffmaterial gebildet .

Die Außenhülle 12 ist mit einem daran vakuumdicht befestigten Stutzen 22 versehen, der koaxial zum Stutzen 15 der Innenhülle 11 verläuft. Der Stutzen 15 der Innennulle 11 ist hier so kurz bemessen, daß er vor Erreichen des Stutzens 22 der Außenhülle 12 endet. Somit befindet sich das Schließelement 16 des Stutzens 15 der Innenhulle 11 innerhalb des Isolationsraumes 13.

Im Bereich des Stutzens 22, insbesondere an dessen in Fig. 1 oberem Ende, ist der Isolationsraum 13 nach dem Einbringen eines Isoliermittels und/oder Evakuieren vakuumdicht verschließbar, wozu ein mechanisches Schließelement 23 dient. Beim ersten Ausführungsbeispiel in Fig. 1 ist dieses Schließelement 23 aus einem durch Wärmeeinbringung, insbesondere durch Schweißen, befestigbaren Schließglied 24 gebildet, das z.B. aus einer Scheibe oder statt dessen aus einer Kappe od.dgl. besteht. Das scheibenförmige Schließglied 24 ist auf das stirnseitige Ende des Stutzens 22 aufgelegt und mit diesem durch die schematisch angedeutete Schweißnaht 25 fest und vakuumdicht verbunden.

Es versteht sich, daß bei einem abgewandelten Ausführungsbeispiel das Schließelement 23 am Stutzen 22 genauso beschaffen sein kann wie das Schließelement 16 am Stutzen 15. Bei einem anderen, nicht gezeigten Ausführungsbeispiel kann statt dessen auch das Schließelement 16 am Stutzen 15 so beschaffen sein wie das Schließelement 23 am Stutzen 22.

Bei der Herstellung des Wärmespeichers 10 wird wie folgt vorgegangen. Zunächst wird der Wärmespeicher 10 mechanisch fertiggestellt, wobei allerdings das Schließelement 16 und das Schließelement 23 noch nicht angebracht sind. Der Isolationsraum 13 ist zu dem Zweck vorgesehen, die Verluste bei der Wärmespeicherung so gering wie möglich zu halten. Zu diesem Zweck wird der Isolationsraum 13 üblicherweise mit einem Isoliermittel gefüllt und evakuiert oder nur evakuiert und dadurch eine Vakuumisolation erreicht. Es hat sich gezeigt, daß im Isolationsraum 13 unter Vakuum ausgasende Stoffe, z.B. H₂O, H₂, den Evakuiervorgang verzögern. Es ist bekannt, aus diesen Gründen den Isolationsraum 13 nach der mechanischen Fertigstellung des Gehäuses des Wärmespeichers 10 zur Entgasung auszuheizen und zu evakuieren. Bei einem bekannten Verfahren erfolgt diese Ausheizung, nachdem der Speicherkern mit Speichermedium gefüllt worden ist. Oft liegt bei bekannten Methoden eine sinnvolle Ausheiztemperatur oberhalb der maximal erlaubten Temperatur des Speichermediums, welches somit bei diesem Ausheizen nach bekannter Methode Schaden nimmt, selbst dann, wenn der Speicherkern während der Ausheizung gegenüber dem Isolationsraum 13 wärmeisoliert wird.

Beim erfindungsgemäßen Wärmespeicher 10 sieht die Erfindung ein Verfahren vor, bei dem man zunächst das Speichermedium noch nicht in den von der Innenhülle 11 umgrenzten Bereich, insbesondere in den Speicherkern, einfüllt, sondern zunächst den Isolationsraum 13 vor dem Einbringen des Speichermediums ausheizt und evakuiert. Dadurch besteht keinerlei Gefahr einer etwaigen Schädigung des Speichermediums durch etwaige zu hohe Temperaturen. Es sind auch keine besonderen Schutzvorrichtungen gegen die Gefahr einer etwaigen Oberhitzung des Speichermediums notwendig. Auch entfallen etwaige sonstige aufwendige Maßnahmen zum Schutz des Speichermediums, z.B. Kühlmaßnahmen. Beim Ausheizen des Isolationsraumes 13 können unter Umständen höhere Ausheiztemperaturen gewählt werden, z.B. oberhalb 200°C; denn da der Wärmespeicher noch nicht mit dem Speichermedium gefüllt ist und somit nur aus Konstruktionswerkstoffen besteht,die höher als das Speichermedium erhitzt werden können, sind zum Ausheizen höhere Temperaturen möglich. Bedarfsweise kann nach dem Ausheizen des Isolationsraumes 13 eine Dichtprufung des Wärmespeichers 10 vorgenommen werden, z.B. durch Abdrücken mit einem inerten Gas, z.B. Helium.

Erst nach dem Ausheizen des Isolationsraumes 13 wird sodann durch die Einfüllöffnung 14 des Stutzens 15 das Speichermedium eingebracht. Wenn beim Einfüllen des Speichermediums die Gefahr besteht, daß dabei in den Isolationsraum 13 neue Verunreinigungen eindringen könnten, so kann der Isolationsraum 13 mit einem inerten Stoff gefüllt werden. Es kann der ausgeheizte Isolationsraum 13 unter Vakuum gehalten werden, während durch die Einfüllöffnung 14 das Speichermedium eingebracht wird. Mit Vorteil wird das Speichermedium, insbesondere Salz, so eingebracht, daß es entweder beim Einbringen bereits flüssig ist oder verflüssigt wird, z.B. durch die im Wärmespeicher 10 nach dem Ausheizen des Isolationsraumes 13 noch verbliebene Wärme, die das eingebrachte Speichermedium erhitzt und verflüssigt. Auf jeden Fall wird das eingebrachte Speichermedium höchstens auf Betriebstemperatur und nicht höher aufgeheizt. Dadurch, daß das Speichermedium beim Einfüllen flüssig ist, werden alle Räume der Matrix des Speicherkerns in dem von der Innenhülle 11 umgrenzten Raum gleichmäßig und gut mit dem Speichermedium ausgefüllt. Nach dem Einfüllen des Speichermediums wird die Einfüllöffnung 14 im Stutzen 15 durch Aufbringen des Schließelements 16 vorzugsweise vakuumdicht verschlossen. Im Anschluß daran erfolgt die Herstellung der Isolationsschicht im Isolationsraum 13, die entweder aus einer Vakuumisolation oder aus dem Einbringen eines Isoliermittels mit zusätzlichem Vakuum besteht. Bei reiner Vakuumisolation wird der Isolationsraum 13 erneut evakuiert und anschließend durch Aufbringen des Schließelements 23 vakuumdicht verschlossen. Wird die Isolationsschicht durch Isoliermittel und zusätzliches Vakuum im Isolationsraum 13 gebildet, so wird der Isolationsraum 13 ebenfalls evakuiert. Das in den Isolationsraum 13 einzuführende Isoliermittel wird vor dem Einbringen mit Vorteil ebenfalls ausgeheizt, z.B. durch Erwärmung über 200°C, so daß aus dem Isoliermittel Luft- und Feuchtigkeitsbestandteile ausgetrieben werden. Das derart ausgeheizte Isoliermittel gelangt dann z.B. in einer hermetisch abgeschlossenen Unterdruckstrecke, in der das gleiche Vakuum wie im Isolationsraum 13 herrscht und die an den Isolationsraum 13 angeschlossen ist, in den Isolationsraum 13, in den somit das Isoliermittel ausgeneizt und unter Unterdruck eingebracht wird. Dadurch wird innerhalb des Isolationsraumes 13 eine bestmögliche Isolierung erreicht. Als Isoliermittel werden z.B. Pulver und/oder Fasern eines isolierenden Materials eingefüllt, wobei dieses Material bedarfsweise noch Strahlungshemmer, insbesondere Ruß, enthalten kann, durch die eine Wärmestrahlung soweit wie möglich ausgeschaltet wird. Nach dem Evakuieren des Isolationsraumes 13 bzw. im anderen Fall nach dem Einbringen des Isoliermittels unter Vakuum in den Isolationsraum 13 wird der Isolationsraum 13 durch Aufbringen des Schließelements 23 vakuumdicht verschlossen. Das Schließelement 23 wird z.B. unter Vakuum angeschweißt, z.B. durch Elektronenstrahlschweißen. Das im Isolationsraum 13 herrschende Vakuum bleibt somit erhalten.

Bei dem in Fig. 2 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles verwiesen ist.

Beim Wärmespeicher 110 in Fig. 2 ist ebenfalls zwischen der Außenhülle 112 und der Innenhülle 111 ein Isolationsraum 113 gebildet. Das zweite Ausführungsbeispiel unterscheidet sich vom ersten dadurch, daß sich der Stutzen 115 der Innenhülle 111 durch den Stutzen 122 der Außenhülle 112 hindurcherstreckt und endseitig über den Stutzen 122 übersteht. Das Schließelement 116 des Stutzens 115 der Innenhülle 111 befindet sich daher außerhalb des Isolationsraumes 113. Es ist außerdem in Abweichung vom ersten Ausführungsbeispiel in Fig. 1 gemäß Fig. 2 als Schließglied 134, z.B. in Gestalt einer Scheibe, Kappe od.dgl., ausgebildet, das analog dem Schließglied 24 in Fig. 1 durch Wärmeeinbringung, insbesondere Schweißen, am Stutzen 115 befestigbar ist.

Das Schließelement 123 am Stutzen 122 der Außenhülle 112 ist so wie beim ersten Ausführungsbeispiel in Fig. 1 als Schließglied 124 in Form einer Scheibe, Kappe od.dgl. ausgebildet, das insbesondere durch Schweißen und hierbei durch Elektronenstrahlschweißen am Stutzen 122 befestigbar ist. Das Schließglied 124 ist vom Stutzen 115 der Innenhülle 111 durchsetzt und besteht somit aus einer Ringscheibe. Es verscnließt den Ringraum, der zwischen den beiden Stutzen 115 und 122 gebildet ist, und den Isolationsraum 113. Gestrichelt ist in Fig. 2 ferner ein im Ringraum enthaltenes provisorisches Verschlußglied 135 angedeutet.

Bei der Herstellung des Wärmespeichers 110 gemäß Fig. 2 wird in gleicher Weise vorgegangen wie bei der Herstellung des Wärmespeichers 10 in Fig. 1. Es wird zunächst und vor dem Einbringen des Speichermediums der Isolationsraum 113 ausgeheizt und evakuiert. Nach dem Ausheizen und Evakuieren des Isolationsraumes 113 ist ein provisorischer Verschluß dieses mittels des provi rischen Verschlußgliedes 135 bedarfsweise möglich, z.B. um das Eindringen etwaiger neuer Verunreinigungen zu vermeiden. Bedarfsweise kann der Isolationsraum 113 deswegen auch mit einem inerten Stoff gefüllt werden, dessen Austreten durch das Anbringen des provisorischen Verschlußgliedes 135 verhindert wird. Gleichwohl ist der Stutzen 115 der Innenhülle 111 nach wie vor von außen her zugänglich, so daß durch den offenen Stutzen 115 nach dem Ausheizen des Isolationsraumes 113 das Speichermedium in zuvor beschriebener Weise eingefüllt werden kann. Hiernach wird der Stutzen 115 mittels des Schließgliedes 134 verschlossen. Danach wird der Isolationsraum 113 mit der Isolationsschicht versehen, und zwar entweder mit einer Vakuumisolation und somit erneut evakuiert oder mit Isoliermittel und zusätzlichem Vakuum. Im letztgenannten Fall wird das Isoliermittel vorzugsweise separat ausgeheizt und unter Unterdruck in den evakuierten Isolationsraum 113 eingebracht, woraufhin der Isolationsraum 113 durch Anbringen des Schließgliedes 124 vakuumdicht verschlossen wird.

Bei beiden Ausführungsbeispielen in Fig. 1 und 2 hat das Einbringen eines Isoliermittels in den jeweiligen Isolationsraum 13 bzw. 113 den Vorteil, daß das Isoliermittel zugleich eine Abstützung der Außenhülle 12 bzw. 112, die unter Unterdruck steht, gegenüber der Innenhülle 11 bzw. 111 bewirkt und somit zur mechanischen Aussteifung mit beiträgt.

## Patentansprüche

1. Wärmespeicher, insbesondere Latentwärmespeicher, mit einer einen Speicherkern mit einem Speichermedium enthaltenden Innenhülle (11) und einer die Innenhülle (11) unter Bildung eines Isolationsraumes (13) mit Abstand umgebenden Außenhülle (12), bei dem der Isolationsraum (13) ausgeheizt und evakuiert ist, wobei die Innenhülle (11) einen Stutzen (15) mit Einfüllöffnung (14) aufweist, über die das Speichermedium einbringbar ist und die nach dem Einbringen des Speichermediums mittels eines mechanischen Schließelements (16) verschließbar ist,
**dadurch gekennzeichnet**,
daß die Außenhülle (12) einen Stutzen (22) mit Einfüllöffnung aufweist, über die der Isolationsraum (13) mit Isoliermittel befüllbar bzw. evakuierbar ist und die mittels eines mechanischen Schließelementes (23) verschließbar ist, daß der Stutzen (15) der Innenhülle (11) koaxial zum Stutzen (22) der Außenhülle (12) angeordnet ist und vor Erreichen des Stutzens (22) der Außenhülle (12) endet und sich das Schließelement (16) des Stutzens (15) der Innenhülle (11) innerhalb des Isolationsraums (13) befindet.

2. Wärmespeicher, insbesondere Latentwärmespeicher, mit einer einen Speicherkern mit einem Speichermedium enthaltenden Innenhülle (111) und einer die Innenhülle (111) unter Bildung eines Isolationsraumes (113) mit Abstand umgebenden Außenhülle (112), bei dem der Isolationsraum (113) ausgeneizt und evakuiert ist, wobei die Innenhülle (111) einen Stutzen (115) mit Einfüllöffnung (114) aufweist, über die das Speichermedium einbringbar ist und die nach dem Einbringen des Speichermediums mittels eines mechanischen Schließelements (116) verschließbar ist,
**dadurch gekennzeichnet**,
daß die Außenhülle (112) einen Stutzen (122) mit Einfüllöffnung aufweist, über die der Isolationsraum (113) mit Isoliermittel befüllbar bzw. evakuierbar ist und die mittels eines mechanischen Schließelementes (123) verschließbar ist, daß der Stutzen (115) der Innenhülle (111) koaxial zum Stutzen (122) der Außenhülle (112) angeordnet ist und sich durch den Stutzen (122) der Außenhülle (112) hindurcherstreckt und endseitig über diesen übersteht und daß sich das Schließelement (116) des Stutzens (115) der Innenhülle (111) außerhalb des Isolationsraumes (113) befindet.

3. Wärmespeicher nach Anspruch 1,
**dadurch gekennzeichnet**,
daß das Schließelement (16) des Stutzens (15) der Innenhülle (11) aus einer aufschraubbaren Verschlußkappe oder einer einschraubbaren Verschlußschraube (18) gebildet ist.

4. Wärmespeicher nacn Anspruch 1 oder 3,
**gekennzeichnet durch**
ein zwischen dem Schließelement (16) und dem die Einfüllöffnung (14) enthaltenden Stutzen (15) angeordnetes vakuumtaugliches Dichtelement (19), z.B. einen Dichtungsring.

5. Wärmespeicher nach Anspruch 4
**dadurch gekennzeichnet**,
daß das Dichtelement (19) aus einem nicht hygroskopischen Kunststoffmaterial gebildet ist.

6. Wärmespeicher nach Anspruch 2,
**dadurch gekennzeichnet**,
daß das Schließelement (116) des Stutzens (115) der Innenhülle (111) aus einem durch Wärmeeinbringung, insbesondere durch Schweißen, am Stutzen (115) befestigbaren Schließglied (134), z. B. einer Scheibe, Kappe od. dgl. ausgebildet ist.

7. Wärmespeicher nach einem der Ansprüche 1 bis 6,
**dadurch gekennzeichnet**,
daß das Schließelement (23; 123) des Stutzens (22; 122) der Außenhülle (12; 112) aus einem durch Wärmeeinbringung, insbesondere durch Schweißen, befestigbaren Schließglied (24; 124), z. B. einer Scheibe, einem Ring, einer Kappe od. dgl., gebildet ist.

8. Wärmespeicher nacn Anspruch 2,
**dadurch gekennzeichnet**,
daß das Schließelement (123) des Stutzens (122) der Außenhülle (112) vom Stutzen (115) der Innenhülle (111) durchsetzt ist und den zwischen beiden Stutzen (115,122) gebildeten Ringraum verschließt.

9. Wärmespeicher nach Anspruch 2 oder 8,
**gekennzeichnet durch**
ein in den Ringraum zwischen dem Stutzen (115) der Innenhülle (111) und dem Stutzen (122) der Außenhülle (112) einbringbares provisorisches Verschlußglied (135).

10. Verfahren zur Herstellung eines Wärmespeichers, insbesondere Latentwärmespeichers, nach Anspruch 1 oder 2, bei dem der Isolationsraum ausgeheizt und evakuiert wird und das Speichermedium erst nach dem Ausheizen des Isolationsraumes (13;113) in das Innere der Innenhülle (11;111) eingebracht wird,
**dadurch gekennzeichnet**,
daß man den ausgeheizten Isolationsraum (13;113) vor dem Einbringen des Speichermediums provisorisch verschließt.

11. Verfahren nach Anspruch 10,
**dadurch gekennzeichnet**,
daßman den Isolationsraum (13; 113) vor dem Verschließen mit einem inerten Stoff füllt.

12. Verfahren nach Anspruch 10 oder 11,
**dadurch gekennzeichnet**,
daß man den Isolationsraum (13;113) nach dem Ausheizen mit Evakuieren und nach dem Einbringen des Speichermediums erneut evakuiert und anschließend verschließt, vorzugsweise vakuumdicht.

13. Verfahren nach Anspruch 10 oder 12,
**dadurch gekennzeichnet**,
daß man den Isolationsraum (13;113) nach demAusheizen mit Evakuieren und nacn dem Einbringen des Speichermediums erneut evakuiert und mit einem Isoliermittel füllt und anschließend verschließt, vorzugsweise vakuumdicht.

14. Verfahren nach einem der Ansprüche 10 bis 13,
**dadurch gekennzeichnet**,
daß man den Isolationsraum (13;113) mit ausgeheiztem und unter Unterdruck stehenden Isoliermittel füllt.

15. Verfahren nach einem der Ansprüche 10 bis 14,
**dadurch gekennzeichnet**,
daß man als Isoliermittel Pulver und/oder Fasern eines isolierenden Materials einfüllt.

16. Verfahren nach einem der Ansprüche 10 bis 15,
**dadurch gekennzeichnet**,
daß man das Isoliermittel mit zugegebenem Strahlungshemmer, insbesondere Ruß, einfüllt.

## Claims

1. Heat accumulator, in particular a latent-heat accumulator, with an inner casing (11) containing an accumulator core with a heat-storage medium and an outer casing (12) surrounding the inner casing (11) to leave an insulation gap (13) between them, in which the insulation gap (13) is baked-out and evacuated, the inner casing (11) having a pipe connection (15) with a filler opening (14), through which the heat-storage medium is introduced and which is closed by means of a mechanical closure (16) after the heat-storage medium has been introduced, characterised in that the outer casing (12) has a pipe connection (22) with a filler opening, through which the insulation gap (13) is filled with insulating agent and/or evacuated and which is closed by means of a mechanical closure (23), that the pipe connection (15) of the inner casing (11) is disposed coaxially to the pipe connection (22) of the outer casing (12) and terminates before reaching the pipe connection (22) of the outer casing (12) and the closure (15) of the pipe connection (15) of the inner casing (11) is located inside the insulation gap (13).

2. Heat accumulator, in particular a latent-heat accumulator, with an inner casing (111) containing an accumulator core with a heat-storage medium and an outer casing (112) surrounding the inner casing (111) to leave an insulation gap (113) between them, in which the insulation gap (113) is baked-out and evacuated, the inner casing (111) has a pipe connection (115) with a filler opening (114), through which the heat-storage medium is introduced and which is closed by means of a mechanical closure (116) after the heat-storage medium has been introduced, characterised in that the outer casing (112) has a pipe connection (122) with a filler opening, through which the insulation gap (113) is filled with insulating agent and/or evacuated and which is closed by means of a mechanical closure (123), that the pipe connection (115) of the inner casing (111) is disposed coaxially to the pipe connection (122) of the outer casing (112) and extends through the pipe connection (122) of the outer casing (112) and at the end side projects beyond the latter and that the closure (116) of the pipe connection (115) of the inner casing (111) is located outside the insulation gap (113).

3. Heat accumulator according to Claim 1, characterised in that the closure (16) of the pipe connection (15) of the inner casing (11) is formed from a closure cap which may be screwed on or a closure screw (18) which may be screwed in.

4. Heat accumulator according to Claim 1 or 3, characterised by a sealing member (19), for example a gasket, capable of maintaining a vacuum, located between the closure (16) and the pipe connection (15) containing the filler opening (14).

5. Heat accumulator according to Claim 4, characterised in that the sealing member (19) is formed from a non hygroscopic synthetic material.

6. Heat accumulator according to Claim 2, characterised in that the closure (116) of the pipe connection (115) of the inner casing (111) is constructed from a closing member (134), for example a disc, cap or the like, able to be attached to the pipe connection (115) by the application of heat, in particular by welding.

7. Heat accumulator according to one of Claims 1 to 6, characterised in that the closure (23; 123) of the pipe connection (22; 122) of the outer casing (12; 112) is formed from a closing member (24; 124), for example a disc, a ring, a cap or the like, able to be attached by the application of heat, in particular by welding.

8. Heat accumulator according to Claim 2, characterised in that the closure (123) of the pipe connection (122) of the outer casing (112) is penetrated by the pipe connection (115) of the inner casing (111) and closes off the annular gap formed between both pipe connections (115, 122).

9. Heat accumulator according to Claim 2 or 8, characterised by a provisional closure member (135) able to be introduced into the annular gap between the pipe connection (115) of the inner casing (111) and the pipe connection (122) of the outer casing (112).

10. Method for producing a heat accumulator, in particular a latent-heat accumulator, according to Claim 1 or 2, in which the insulation gap is baked-out and evacuated and the heat-storage medium is introduced into the interior of the inner casing (11; 111) solely after the baking-out of the insulation gap (13; 113), characterised in that the baked-out insulation gap (13; 113) is provisionally closed before the introduction of the heat-storage medium.

11. Method according to Claim 10, characterised in that the insulation gap (13; 113) is filled with an inert substance before closing.

12. Method according to Claim 10 or 11, characterised in that the insulation gap (13; 113) is once again evacuated and then closed, preferably in a vacuum-tight manner after the baking-out with evacuation and after the introduction of the heat-storage medium.

13. Method according to Claim 10 or 12, characterised in that the insulation gap (13; 113) is once again evacuated and filled with an insulating agent and then closed, preferably in a vacuum-tight manner, after the baking-out with evacuation and after the introduction of the heat-storage medium.

14. Method according to one of Claims 10 to 13, characterised in that the insulation gap (13; 113) is filled with baked-out insulating agent which is under reduced pressure.

15. Method according to one of Claims 10 to 14, characterised in that powder and/or fibres of an insulating material are introduced as the insulating agent.

16. Method according to one of Claims 10 to 15, characterised in that the insulating agent is introduced with added radiation inhibitor, in particular carbon black.

## Revendications

1. Accumulateur de chaleur, en particulier accumulateur de chaleur latente, avec une gaine intérieure (11) contenant un noyau accumulateur avec un agent accumulateur et une gaine extérieure (12) contenant avec un espacement la gaine intérieure (11) en formant un compartiment d'isolation (13), sur lequel le compartiment d'isolation (13) est chauffé et mis sous vide, l'enveloppe intérieure (11) présentant une tubulure (15) avec orifice de remplissage (14), par lequel l'agent accumulateur peut être introduit et qui peut être verrouillé après l'introduction de l'agent accumulateur au moyen d'un élément de fermeture (16) mécanique, caractérisé en ce que la gaine extérieure (12) présente une tubulure (22) avec orifice de remplissage par lequel le compartiment d'isolation (13) peut être rempli et mis sous vide au moyen d'un produit isolant et qui peut être verrouillé au moyen d'un élément de fermeture (23) mécanique, en ce que la tubulure (15) de la gaine intérieure (11) est disposée sur le même axe que la tubulure (22) de la gaine extérieure (12) et se termine avant d'atteindre la tubulure (22) de la gaine extérieure (12) et en ce que l'élément de fermeture (16) de la tubulure (15) de la gaine intérieure (11) se trouve à l'intérieur du compartiment d'isolation (13).

2. Accumulateur de chaleur, en particulier accumulateur de chaleur latente, avec une gaine intérieure (111) contenant un noyau accumulateur avec un agent accumulateur et une gaine extérieure (112) entourant avec un espacement la gaine intérieure (111) en formant un compartiment d'isolation (113), avec lequel le compartiment d'isolation (113) est chauffé et mis sous vide, la gaine intérieure (111) présentant une tubulure (115) avec orifice de remplissage (114) par lequel l'agent accumulateur peut être introduit et qui peut être verrouillé après l'introduction de l'agent accumulateur au moyen d'un élément de fermeture (116) mécanique, caractérisé en ce que la gaine extérieure (112) présente une tubulure (122) avec orifice de remplissage par lequel le compartiment d'isolation (113) peut être rempli et mis sous vide avec le produit isolant et qui peut être verrouillé au moyen d'un élément de fermeture (123) mécanique, en ce que la tubulure (115) de la gaine intérieure (111) est disposée sur le même axe Que la tubulure (122) de la gaine extérieure (112), s'étend à travers la tubulure (122) de la gaine extérieure (112) et déborde de la tubulure aux extrémités et en ce que l'élément de fermeture (116) de la tubulure (115) de la gaine intérieure (111) se trouve à l'extérieur du compartiment d'isolation (113).

3. Accumulateur de chaleur selon la revendication 1, caractérisé en ce que l'élément de fermeture (16) de la tubulure (15) de la gaine intérieure (11) est constituée d'un capuchon de fermeture vissable dessus ou d'une vis de fermeture (18) vissable à l'intérieur.

4. Accumulateur de chaleur selon la revendication 1 ou 3, caractérisé par un élément d'étanchéité (19), par exemple une bague d'étanchéité, apte pour le vide et disposé entre l'élément de fermeture (16) et la tubulure (15) contenant l'orifice de remplissage (14).

5. Accumulateur de chaleur selon la revendication 4, caractérisé en ce que l'élément d'étanchéité (19) est constitué d'un matériau plastique non hygroscopique.

6. Accumulateur de chaleur selon la revendication 2, caractérisé en ce que l'élément de fermeture (116) de la tubulure (115) de la gaine intérieure (111) est constitué d'un élément de fermeture (134), par exemple une rondelle, un capuchon ou similaire, qui peut être fixé sur la tubulure (115) par l'introduction de chaleur, en particulier par soudage.

7. Accumulateur de chaleur selon l'une quelconque des revendications 1 à 6, caractérisé en ce que l'élément de fermeture (23 ; 123) de la tubulure (22 ; 122) de la gaine extérieure (12 ; 112) est constitué d'un élément de fermeture (24 ; 124) par exemple une rondelle, une bague, un capuchon ou similaire, qui peut être fixé par l'introduction de chaleur, en particulier par soudage.

8. Accumulateur de chaleur selon la revendication 2, caractérisé en ce que l'élément de fermeture (123) de la tubulure (122) de la gaine extérieure (112) est traversé par la tubulure (115) de la gaine intérieure (111) et ferme l'espace annulaire formé entre les deux tubulures (115, 122).

9. Accumulateur de chaleur selon la revendication 2 ou 8, caractérisé par un élément de verrouillage (135) provisoire qui peut être introduit dans l'espace annulaire entre la tubulure (115) de la gaine intérieure (111) et la tubulure (122) de la gaine extérieure (112).

10. Procédé pour la fabrication d'un accumulateur de chaleur, en particulier un accumulateur de chaleur latente selon la revendication 1 ou 2, avec lequel le compartiment d'isolation est chauffé et mis sous vide et l'agent accumulateur est introduit qu'après le chauffage du compartiment d'isolation (13 ; 113) à l'intérieur de la gaine intérieure (11 ; 111) caractérisé en ce qu'on verrouille provisoirement le compartiment d'isolation (13 ; 113) chauffé avant l'introduction de l'agent accumulateur.

11. Procédé selon la revendication 10, caractérisé en ce qu'on remplit le compartiment d'isolation (13 ; 113) avant le verrouillage avec un produit inerte.

12. Procédé selon la revendication 10 ou 11, caractérisé er ce qu'on met sous vide de nouveau le compartiment d'isolation (13 ; 113) après le réchauffement avec l'évacuation de l'air et après l'introduction de l'agent accumulateur et qu'on le verrouille ensuite, de préférence de façon étanche au vide.

13. Procédé selon la revendication 10 ou 12, caractérisé en ce qu'on met sous vide de nouveau le compartiment d'isolation (13 ; 113) après le réchauffement avec l'évacuation de l'air et après l'introduction de l'agent accumulateur, on le remplit avec un agent isolant et on le verrouille ensuite, de préférence de façon étanche au vide.

14. Procédé selon l'une quelconque des revendications 10 à 13, caractérisé en ce qu'on remplit le compartiment d'isolation (13 ; 113) avec un produit isolant chauffé et sous vide.

15. Procédé selon l'une quelconque des revendications 10 à 14, caractérisé en ce qu'on verse comme agent isolant de la poudre et/ou des fibres d'un produit isolant.

16. Procédé selon l'une quelconque des revendications 10 à 15, caractérisé en ce qu'on verse l'agent isolant avec un inhibiteur de rayonnement ajouté, en particulier de la suie.
